# EUROPÄISCHE PATENTSCHRIFT

(11) **EP 2 310 656 B1**
(45) Veröffentlichungstag und Bekanntmachung des Hinweises auf die Patenterteilung: **09.10.2013**
(21) Anmeldenummer: 09780025.4
(22) Anmeldetag: 30.06.2009
(51) Int. Cl.: F02D 41/02, F02D 41/14

(54) **VERFAHREN ZUM BETRIEB EINER ABGASANLAGE MIT LAMBDA-REGELUNG**
METHOD FOR OPERATING AN EXHAUST-GAS SYSTEM WITH LAMBDA REGULATION
PROCÉDÉ DE CONDUITE D'UNE INSTALLATION DE TRAITEMENT DES GAZ D'ÉCHAPPEMENT À RÉGULATION LAMBDA

(30) Priorität: 01.08.2008 DE 102008036127
(43) Veröffentlichungstag der Anmeldung: 20.04.2011
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2009/058179
(87) Internationale Veröffentlichungsnummer: WO 2010/012557

(56) Entgegenhaltungen:
- EP-A- 1 510 671
- EP-A- 2 063 090
- DE-A1- 19 801 815
- DE-A1-102004 019 660
- FR-A- 2 829 526

## Beschreibung

Die vorliegende Erfindung betrifft ein Verfahren zum Betrieb einer Abgasanlage einer Verbrennungskraftmaschine, in der wenigstens ein Partikelabscheider und ein Katalysator angeordnet sind. Darüber hinaus wird auch ein Kraftfahrzeug angegeben, das zur Durchführung des Verfahrens geeignet ist. Die Erfindung findet insbesondere Anwendung im Zusammenhang mit der Regeneration von Partikelabscheidern während des Betriebes der Verbrennungskraftmaschine.

Gerade im Zusammenhang mit der Behandlung von Abgasen aus Otto-Motoren können Probleme bei der Beseitigung von festen Verbrennungsrückständen entstehen. Bislang wurde bei der Abgasbehandlung von Otto-Motoren festgestellt, dass im Hinblick auf die Masse deutlich weniger Partikel im Abgas erzeugt werden als dies im Vergleich zum Diesel-Motor der Fall ist. Für eine Beseitigung dieser Ruß-Partikel wird beispielsweise ein Partikelabscheider (Wall-Flow-Filter, Nebenstromfilter etc.) eingesetzt, in dem die Partikel zurückgehalten werden. Um nunmehr ein Zusetzen zu vermeiden und/oder wieder eine Effektivitätssteigerung bei dem Partikelabscheider zu erreichen, wird der Ruß thermisch, beispielsweise bei einer Temperatur von 550 ° bis 600 °C umgesetzt, wofür Sauerstoff benötigt wird. Siehe zum Beispiel EP 1 510 671.

Für Otto-Motoren wird üblicherweise eine so genannte Lambda-Regelung eingesetzt. Eine solche Lambda-Regelung dient insbesondere dazu, die Verbrennungsvorgänge in der Verbrennungskraftmaschine hinsichtlich Leistung und spezifischem Kraftstoffverbrauch anzupassen. Als Lambda (λ) bezeichnet man dabei das Verhältnis Luft zu Brennstoff im Vergleich zu einem stöchiometrischen Gemisch. Beim stöchiometrischen Gemisch ist genau die Luftmenge vorhanden, die benötigt wird, um den Brennstoff vollständig zu verbrennen. Dies wird als λ = 1,0 bezeichnet. Bei Benzin beträgt das Massenverhältnis dabei 14,7 : 1. Ist mehr Brennstoff vorhanden, spricht man von einem fetten Gemisch (λ < 1), bei Luftüberschuss von magerem Gemisch (λ > 1). Die Lambda-Regelung erfasst den tatsächlichen Lambda-Wert über geeignete Sensoren und verändert die Brennstoffmenge oder Luftmenge so, dass der Lambda-Regelwert eingestellt ist.

Bei Abgasanlagen, die mit einem Drei-Wege-Katalysator ausgeführt sind, ist die Lambda-Regelung so eingestellt, dass diese den Regelwert 1,0 genau einhält. Hierfür sind zwei unterschiedliche Varianten bekannt, nämlich einmal die Variante, nach der der Lambdawert konstant exakt auf 1,0 gehalten wird und eine Variante, bei der eine konstante Schwingung des tatsächlichen Lambdawertes um den Lambda-Mittelwert 1,0 durchgeführt wird. Damit wird das Abgas mit einer Zusammensetzung bereitgestellt, bei der eine möglichst effektive Umsetzung der darin noch enthaltenden Schadstoffe beim Kontakt mit dem Drei-Wege-Katalysator erreicht.

Hiervon ausgehend ist es Aufgabe der vorliegenden Erfindung, die mit Bezug auf den Stand der Technik geschilderten Probleme zumindest teilweise zu lösen. Insbesondere soll ein Verfahren angegeben werden, bei dem eine effektivere Umsetzung von Schadstoffen und/oder Partikeln aus dem Abgasstrom einer Verbrennungskraftmaschine während des Betriebes erreicht werden soll. Darüber soll ein Kraftfahrzeug mit einer Abgasanlage angegeben werden, mit dem sich eine kontrollierte Regelung der Regeneration des Partikelabscheiders verwirklichen lässt, wobei gleichermaßen auch gasförmige Bestandteile weiter sicher und effektiv umgesetzt werden.

Diese Aufgaben werden gelöst mit einem Verfahren gemäß den Schritten des Patentanspruchs 1 sowie einem Kraftfahrzeug mit den Merkmalen des Patentanspruchs 7. Weitere vorteilhafte Ausgestaltungen der Erfindung sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, veranschaulicht die Erfindung weiter und gibt zusätzliche Ausführungsbeispiele der Erfindung an.

Das erfindungsgemäße Verfahren zum Betrieb einer Abgasanlage einer Verbrennungskraftmaschine, in der wenigstens Partikelabscheider und ein Katalysator angeordnet sind umfasst zumindest die folgenden Schritte:
a) Betreiben der Prozesse in der Verbrennungskraftmaschine mit einer Lambda-Regelung um einen Regelwert;
b) Identifizierung eines Regenerationsprozesses des Partikelabscheiders;
c) Bestimmung eines Sauerstoffbedarfs für den Regenerationsprozesses des Partikelabscheiders;
d) Anpassen der Lambda-Regelung um den bestimmten Sauerstoffbedarf für den Zeitraum des Regenerationsprozesses des Partikelabscheiders.

Mit Schritt a) ist insbesondere gemeint, dass die Zufuhr von Luft und Kraftstoff hin zur Verbrennungskraftmaschine in Abhängigkeit des Lambda-Wertes erfolgt. Dabei wird regelmäßig für den Betrieb der Verbrennungskraftmaschine ein überwiegend konstanter Regelwert vorgegeben.

Die Identifizierung eines Regenerationsprozesses des Partikelabscheiders gemäß Schritt b) kann messtechnisch und/oder rechnerisch bestimmt werden. So kann beispielsweise der Druckabfall über den Partikelabscheider gemessen und/oder berechnet werden. Auch ist möglich, dass ein Rechenmodell vorliegt, aus dem die eingelagerte Menge an Partikeln in Abhängigkeit von den Prozessen in der Verbrennungskraftmaschine bestimmt bzw. berechnet werden kann. Jedenfalls wird hier ein Grenzwert betrachtet, dessen Erreichen nun eine Regeneration des Partikelabscheiders nach sich zieht. Dieser Grenzwert kann dabei fix sein, es ist aber auch möglich, hier einen an die Lastsituation der Verbrennungskraftmaschine und/oder die Temperaturen in der Abgasanlage variablen Grenzwert anzusetzen. Gemäß Schritt c) wird nun bestimmt, wie viel Sauerstoff im Abgas allein für die Oxidation der Partikel im Partikelabscheider benötigt wird. Hierfür können insbesondere auch diverse Randbedingungen mit einbezogen werden, wie beispielsweise die Temperatur des Abgases, die Strömungsgeschwindigkeit des Abgases, die Temperatur im Partikelabscheider, die Masse und/oder Größe und/oder Verteilung der Partikel im Partikelabscheider, etc. Der Sauerstoffbedarf wird dabei entweder anhand konkreter Messwerte bestimmt und/oder, gegebenenfalls unter Verwendung geeigneter Modelle, berechnet.

In Abhängigkeit des so bestimmten Sauerstoffbedarfs wird nun die Lambda-Regelung angepasst, so dass insbesondere mehr Luft (bzw. Sauerstoff) zugeführt wird, um nur genau den erforderlichen bestimmten Sauerstoffbedarf dem Abgas hinzuzufügen. Damit wird also für den Zeitraum des Regenerationsprozesses des Partikelabscheiders so viel zusätzlicher Sauerstoff zugeführt, dass einerseits die Regeneration des Partikelabscheiders mit der gewünschten Umsatzrate stattfindet, andererseits aber auch der Katalysator in einem Abgas-Umfeld umwandelt, in dem dieser effektiv ist.

In diesem Zusammenhang ist bevorzugt, dass der Regelwert in Schritt a) ein Lambda-Wert von 1,0 ist. Insofern ist das Verfahren insbesondere geeignet, die Verbrennungsprozesse in einem Otto-Motor zu regeln, so dass ein in der Abgasanlage positionierter Drei-Wege-Katalysator auch während des Regenerationsprozesses des Partikelabscheiders in seinem optimalen Umfeld arbeitet.

Gemäß einer Weiterbildung wird auch vorgeschlagen, dass der Regelwert in Schritt d) ein Lambda-Wert im Bereich vom 1,02 bis 1,05 ist. Der hier vorgeschlagene Bereich des Lambda-Wertes orientiert sich exakt an dem Sauerstoffbedarf für den Regenerationsprozess des Partikelabscheiders und ist bevorzugt während der gesamten Dauer des Regenerationsprozesses einzuhalten. Insoweit wird hier insbesondere vorgeschlagen, dass der (gemittelte) Lambda-Wert in Abhängigkeit der Fahrleistung und bestimmter Temperaturen nach mager verschoben wird.

Neben der Erhöhung des Mittelwertes des Lambda-Wertes für den Zeitraum des Regenerationsprozesses des Partikelabscheiders wird auch vorgeschlagen, dass der Regelwert in Schritt a) um einen Lambda-Wert von 1,0 mit einer ersten Amplitude variiert wird und in Schritt d) eine zweite Amplitude eingestellt wird, die größer als die erste Amplitude ist. Auf diese Weise wird zumindest periodisch ein erhöhter Sauerstoff-Anteil im Abgas während des Zeitraums des Regenerationsprozesses bereitgestellt, so dass auch hier der Ruß sicher umgesetzt werden kann. Die Größenunterschiede der Amplituden beträgt bevorzugt 2 bis 10 %, insbesondere 3 bis 6 %.

Gemäß einer Weiterbildung des Verfahrens wird auch vorgeschlagen, dass die Bestimmung eines Sauerstoffbedarfs anhand eines Regenerationsmodells des Partikelabscheiders berechnet wird. Das heißt insbesondere, dass unter Berücksichtigung der Verbrennungsprozesse, Temperatur etc. oder unabhängig davon, die Identifizierung eines Regenerationsprozesses des Partikelabscheiders aus einem Regenerationsmodell erfolgt. Das Regenerationsmodell kann Erfahrungswerte und/oder Parameter enthalten, anhand derer die Notwendigkeit für einen Regenerationsprozess des Partikelabscheiders identifizierbar ist.

Das Verfahren wird insbesondere dann durchgeführt, wenn während Schritt d) eine Temperatur von mindestens 500 °C im Bereich des Partikelabscheiders vorliegt. Die Temperatur im Bereich des Partikelabscheiders kann die Temperatur des Partikelabscheiders selbst sowie vor- und/oder nachgelagerte Abschnitte der Ab-gasanlage bzw. die Temperatur des anströmenden bzw. abströmenden Abgases betreffen. Hierfür können insbesondere Temperatursensoren und/oder Temperaturmodelle zur rechnerischen Bestimmung der Temperatur hilfreich sein. Darüber hinaus wird auch ein Kraftfahrzeug aufweisend einen Otto-Motor sowie eine sich an den Otto-Motor anschließende Abgasanlage vorgeschlagen, die von dem im Otto-Motor erzeugten Abgase in einer Strömungsrichtung durchströmbar ist. Die Abgasanlage weist weiter mindestens einen Sensor auf. Zudem ist in der Abgasanlage in Strömungsrichtung hintereinander wenigstens ein Partikelabscheider und ein Drei-Wege-Katalysator angeordnet, wobei eine Steuerung für den Otto-Motor mit dem mindestens einen Sensor der Abgasanlage zusammenwirkt und zur Durchführung des hier erfindungsgemäß beschriebenen Verfahrens eingerichtet ist.

Der Vollständigkeit halber sei darauf hingewiesen, dass neben Partikelabscheider und Drei-Wege-Katalysator auch weitere Komponenten zur Abgasnachbehandlung vorgesehen sein können. Relevant ist hierbei, dass der Partikelabscheider stromaufwärts des Drei-Wege-Katalysators angeordnet ist, das Abgas also zuerst den Partikelabscheider kontaktiert, bevor es den Drei-Wege-Katalysator erreicht. Zwischen Partikelabscheider und Drei-Wege-Katalysator können demnach auch weitere Abgasnachbehandlungseinheiten vorgesehen sein. Bei der Steuerung kann es sich insbesondere um die Motorsteuerung des Kraftfahrzeugs handeln, wobei diese auch in ein Bordsystem des Kraftfahrzeugs integriert sein kann. Jedenfalls können in der Steuerung die Signale bzw. Daten der Sensoren verarbeitet und gegebenenfalls auch mit Rechenmodellen verglichen bzw. korreliert werden.

Bei einem solchen Kraftfahrzeug wird als vorteilhaft angesehen, dass eine erste Lambda-Sonde in Strömungsrichtung vor dem Partikelabscheider und wenigstens eine zweite Lambda-Sonde nach dem Partikelabscheider oder nach dem Drei-Wege-Katalysator angeordnet ist. Gegebenenfalls ist auch möglich, dass zumindest eine der hier genannten Lambda-Sonden im Partikelabscheider bzw. dem Drei-Wege-Katalysator integriert ist. Die Lambda-Sonden stellen dabei Sensoren der Abgasanlage dar. Die Lambda-Sonden können insbesondere dazu eingesetzt werden, festzustellen, wenn der Regenerationsprozess des Partikelabscheiders im Wesentlichen beendet ist, wobei hierzu insbesondere die dem Partikelabscheider nachgeordnete Lambda-Sonde verwendet wird. Insoweit lässt sich hierdurch der Zeitraum des Regenerationsprozesses des Partikelabscheiders bestimmen und somit das Ende des Schrittes d) einleiten.

Außerdem wird ein solches Kraftfahrzeug bevorzugt, bei dem der Partikelabscheider mit einem Wabenkörper ausgeführt ist, der offene Kanäle aufweist, die von einer metallischen Folie und einem Drahtvlies begrenzt sind. Bei dem hier vorgeschlagenen Partikelabscheider handelt es sich demnach nicht um einen sogenannten Wall-flow-filter mit wechselseitig verschlossenen Kanälen, sondern um eine offene Struktur, die bei in anderen Anmeldungen der Anmelderin auch mit "Nebenstromfilter" bezeichnet wird. Bei einem solchen Partikelabscheider hat der Wabenkörper eine Vielzahl von Kanälen, wobei diese wiederum grundsätzlich für das Abgas durchströmbar ist. In den Kanälen sind Leitschaufeln, Erhebungen und dergleichen vorgesehen, die eine Umlenkung der Partikel hin zu dem Wandabschnitt mit dem Drahtvlies bewirken, wobei stets gewährleistet ist, dass zumindest ein Teil des den Kanal durchströmenden Abgases auch an diesen Leitschaufeln, Erhebungen etc. vorbeiströmen und folglich im Kanal verbleiben kann. Die metallische Folie ist hierfür bevorzugt mit einer Wellstruktur ausgeführt, das metallische Drahtvlies umfasst zu diesem Zweck eine oder mehrere Lagen aus zueinander angeordneten Feinstdrähten, die miteinander versintert und/oder verschweißt sind. Gegebenenfalls können die Folie und/oder das Vlies mit einer (katalytisch aktiven) Beschichtung ausgeführt sein.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese aber nicht darauf beschränkt ist. Es zeigen schematisch:
- Fig. 1:: eine erste Ausprägung des erfindungsgemäßen Verfahrens,
- Fig. 2:: eine zweite Ausführungsvariante des erfindungsgemäßen Verfahrens,
- Fig. 3:: eine Ausführungsvariante eines Kraftfahrzeugs zur Durchführung des Verfahrens,
- Fig. 4:: einen offenen Partikelabscheider, und
- Fig. 5:: ein Detail eines weiteren offenen Partikelabscheiders.

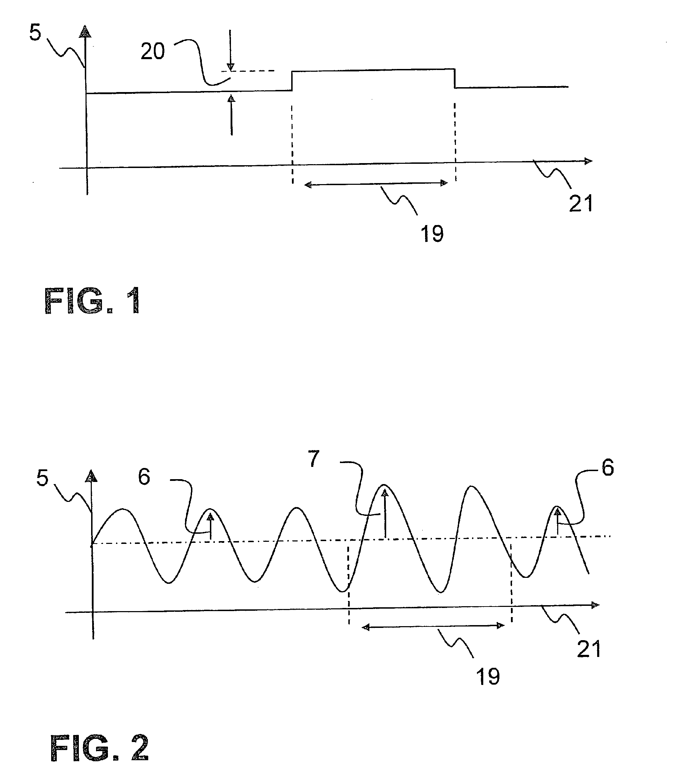

Fig. 1 veranschaulicht in einem Diagramm, in dem der Regelwert 5 der Lambda-Regelung auf der y-Achse veranschaulicht ist, während des Betriebes der Abgasanlage. Hierbei wird der Verlauf des Lambda-Wertes als Regelwert 5 über die Zeit 21 dargestellt. Von links ausgehend ist festzustellen, dass zunächst der Betrieb der Prozesse in der Verbrennungskraftmaschine mit einem konstanten Regelwert 5, beispielsweise einem Lambda-Wert von 1,0, durchgeführt wird. Erfolgt nun eine Identifizierung eines Regenerationsprozesses des Partikelabscheiders, wird der erforderliche Sauerstoffbedarf bestimmt. Dann erfolgt das Anpassen der Lambda-Regelung um bestimmten Sauerstoffbedarf 20, so dass hier über den Regenerationszeitraum 19 der Regelwert 5 stufenförmig angehoben wird. Dabei hat der Regelwert 5 in diesem Regenerationszeitraum 19 einen Wert von 1,02 bis 1,05. Wird das Ende des Regenerationsprozesses des Partikelabscheiders festgestellt, sinkt der Regelwert 5 wieder auf seinen ursprünglichen Regelwert.
Fig. 2 zeigt eine ähnliche Situation, wobei hier der Betrieb der Verbrennungskraftmaschine mit einer dynamischen Lambda-Amplituden-Regelung durchgeführt wird. Auch hier ist der Regelwert 5 über die Zeit 21 dargestellt. Von links ausgehend ist zu erkennen, dass der Regelwert 5 um einen hier als Strich-Punkt-Strich-Linie gekennzeichneten Mittelwert mit einer ersten Amplitude 6. Für den Regenerationszeitraum 19 wird die Lambda-Regelung nun so angepasst, dass die zweite Amplitude 7 größer als die erste Amplitude 6 ist. Damit wird nun der zuvor bestimmte Sauerstoffbedarf zusätzlich zur Verfügung gestellt. Nach dem Ende des Regenerationszeitraums des Partikelabscheiders sinkt die Amplitude wieder auf den Wert auf der ersten Amplitude 6 zurück.

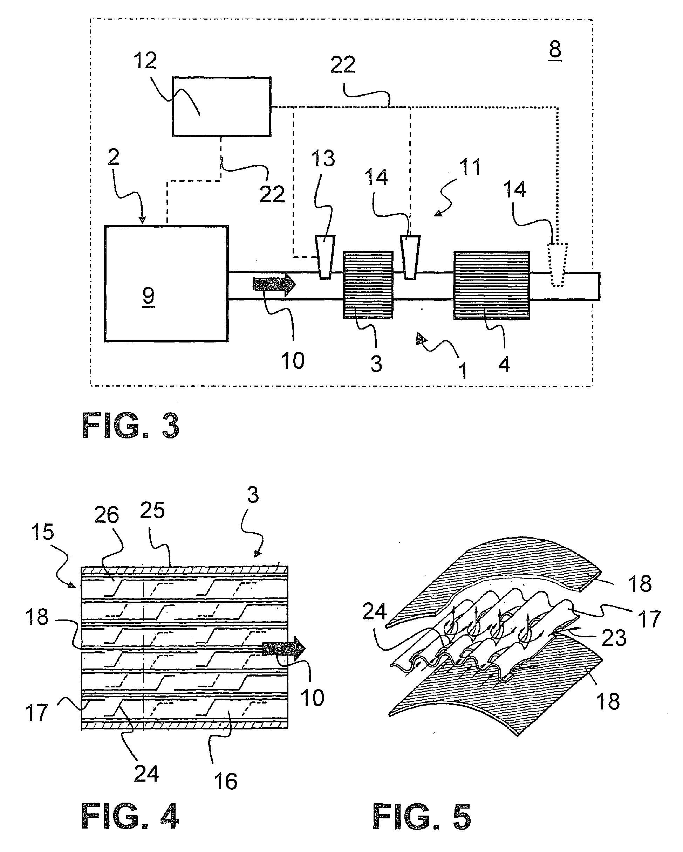

Fig. 3 veranschaulicht schematisch ein Kraftfahrzeug 8 mit einer Verbrennungskraftmaschine 2 nach Art eines Otto-Motors 9. An den Otto-Motor 9 schließt sich eine Abgasanlage 1 an. Das im Otto-Motor erzeugte Abgas strömt in Strömungsrichtung zunächst durch einen Partikelabscheider 3 und anschließend durch einen Drei-Wege-Katalysator 4. In Strömungsrichtung 10 gesehen vor dem Partikelabscheider 3 ist eine erste Lambda-Sonde 13 vorgesehen. Eine zweite Lambda-Sonde 4 ist dem Partikelabscheider 3 direkt nachgestellt. Gleichwohl ist aber in Fig. 3 auch eine Position der zweiten Lambda-Sonde 14 angedeutet, die in Strömungsrichtung 10 gesehen hinter dem Drei-Wege-Katalysator 4 liegt. Das Kraftfahrzeug 8 weist zudem eine Steuerung 12 auf. Die Steuerung 12 ist über Leitungen 22, daten- bzw. signaltechnisch und/oder steuerungstechnisch mit Teilen der Verbrennungskraftmaschine 2 und den Sensoren 11 verbunden. Insbesondere können die mit den Sensoren 11 erfassten Abgas-Kenngrößen zur Beeinflussung der Prozesse in der Verbrennungskraftmaschine 2 durch die Steuerung 12 dienen.
Fig. 4 zeigt in einem Längsschnitt eine mögliche Ausführungsvariante eines Partikelabscheiders 3 nach Art eines Nebenstromfilters mit offenen Kanälen 16. Die Kanäle 16 sind dabei einerseits jeweils mit metallischer Folie und andererseits mit einem Drahtvlies 18 begrenzt. Beim Durchströmen des Partikelabscheiders 3 in Strömungsrichtung 10 wird das Abgas mit den Partikeln aufgrund von Leitflächen 24 und/oder Öffnungen 26 gegen das Drahtvlies 18 gelenkt, so dass das Abgas teilweise entlang des Drahtvlieses 18 und/oder durch das Drahtvlies 18 hindurchströmt. Dabei werden die Partikel zurückgehalten. Bei einem solchen offenen Partikelabscheider 3 besteht nicht die Gefahr, dass die einzelnen Kanäle 16 sich zusetzen, weil stets ein Bypass bzw. Nebenstrom an den Leitflächen 24 der Kanäle 10 vorbei möglich ist. Aus diesem Grund muss relativ selten eine Regeneration durchgeführt werden. Üblicherweise sind alle Komponenten eines solchen Partikelabscheiders 3 aus Metall, so dass dieser mit einem metallischen Gehäuse 25 und einem vollkommen metallischen Wabenkörper 15 gebildet ist.
Fig. 5 zeigt in einem Detail schematisch die Ablenkung einzelner Abgasströmungen 13 in Folge der strukturierten und Leitflächen 24 aufweisenden metallischen Folie 17. In Folge dieser Leitflächen 24 wird zumindest ein Teil des Abgases hin zu den metallischen Drahtvliesen 18 geleitet, wobei diese Strömungen insbesondere aufgrund von Druckunterschieden in benachbarte Kanäle weiter unterstützt wird.

### Bezugszeichenliste

- 1: Abgasanlage
- 2: Verbrennungskraftmaschine
- 3: Partikelabscheider
- 4: Katalysator
- 5: Regelwert
- 6: ersten Amplitude
- 7: zweite Amplitude
- 8: Kraftfahrzeug
- 9: Otto-Motor
- 10: Strömungsrichtung
- 11: Sensor
- 12: Steuerung
- 13: erste Lambda-Sonde
- 14: zweite Lambda-Sonde
- 15: Wabenkörper
- 16: Kanäle
- 17: metallische Folie
- 18: Drahtvlies
- 19: Regenerationszeitraum
- 20: Sauerstoffbedarf
- 21: Zeit
- 22: Leitung
- 23: Abgasströmung
- 24: Leitflächen
- 25: Gehäuse
- 26: Öffnung

## Patentansprüche

1. Verfahren zum Betrieb einer Abgasanlage (1) einer Otto-Verbrennungskraftmaschine (2), in der wenigstens ein Partikelabscheider (3) und stromabwärts ein Katalysator (4) angeordnet ist, umfassend zumindest die folgenden Schritte:
a) Betreiben der Prozesse in der Verbrennungskraftmaschine (2) mit einer Lambda-Regelung um einen Regelwert (5);
b) Identifizierung eines Regenerationsprozesses des Partikelabscheiders (3);
c) Bestimmung eines Sauerstoffbedarfs,
d) Anpassen der Lambda-Regelung um genau den erforderlichen bestimmten Sauerstoffbedarf für den Zeitraum des Regenerations-prozesses des Partikelabscheiders (3),
**dadurch gekennzeichnet, dass** das Verfahren zusätzlich folgenden schritt umfasst: die Bestimmung des Sauerstoffsbedarfs der allein für den Regenerationsprozesses des Partikelabscheiders (3), also für die Oxidation der Partikel im Partkelabscheider, benötigt wird.

2. Verfahren nach Patentanspruch 1, bei dem der Regelwert in Schritt a) ein Lambda-Wert von 1,0 ist.

3. Verfahren nach Patentanspruch 1 oder 2, bei dem der Regelwert (5) in Schritt d) ein Lambda-Wert im Bereich von 1,02 bis 1,05 ist.

4. Verfahren nach Patentanspruch 1 oder 2, bei dem der Regelwert (5) in Schritt a) um einen Lambda-Wert von 1,0 mit einer ersten Amplitude (6) variiert wird und in Schritt d) eine zweite Amplitude (7) eingestellt wird, die größer als die erste Amplitude (6) ist.

5. Verfahren nach einem der vorhergehenden Patentansprüche, bei dem die Bestimmung eines Sauerstoffbedarfs anhand eines Regenerationsmodells des Partikelabscheiders (3) berechnet wird.

6. Verfahren nach einem der vorhergehenden Patentansprüche, bei dem während Schritt d) eine Temperatur von mindestens 500°C im Bereich des Partikelabscheiders (3) vorliegt.

7. Kraftfahrzeug (8) aufweisend einen Otto-Motor (9) sowie eine sich an den Otto-Motor (9) anschließende Abgasanlage (1), die von dem im Otto-Motor (9) erzeugten Abgas in einer Strömungsrichtung (10) durchströmbar ist, die mindestens einen Sensor (11) aufweist und in der in Strömungsrichtung (10) hintereinander wenigstens ein Partikelabscheider (3) und ein Drei-Wege-Katalysator (4) angeordnet ist, wobei eine Steuerung (12) für den Otto-Motor (9) mit dem mindestens einen Sensor (11) der Abgasanlage (1) zusammenwirkt und zur Durchführung eines Verfahrens nach einem der vorhergehenden Patentansprüche eingerichtet ist.

8. Kraftfahrzeug (8) nach Patentanspruch 7, bei dem eine erste Lambda-Sonde (13) in Strömungsrichtung (10) vor dem Partikelabscheider (3) und wenigstens eine zweite Lambda-Sonde (14) nach dem Partikelabscheider (3) oder nach dem Drei-Wege-Katalysator (4) angeordnet ist.

9. Kraftfahrzeug (8) nach Patentanspruch 7 oder 8, bei dem der Partikelabscheider (3) mit einem Wabenkörper (15) ausgeführt ist, der offene Kanäle (16) aufweist, die von einer metallischen Folie (17) und einem Drahtvlies (18) begrenzt sind.

## Claims

1. Method for operating an exhaust system (1) of an Otto internal combustion engine (2), in which exhaust system (1) are arranged at least one particle separator (3) and downstream one catalytic converter (4), comprising at least the following steps:
a) carrying out the processes in the internal combustion engine (2) with lambda control about a control value (5);
b) identifying a regeneration process of the particle separator (3);
c) determining an oxygen demand;
d) adapting the lambda control by exactly the required determined oxygen demand for the period of the regeneration process of the particle separator (3);
**characterized in that** the method additionally comprises the following step: the determination of the oxygen demand, which is solely required for the regeneration process of the particle separator (3), that is for the oxidation of the particles in the particle separator.

2. Method according to claim 1, in which the control value in step a) is a lambda value of 1.0.

3. Method according to patent claim 1 or 2, in which the control value (5) in step d) is a lambda value in the range from 1.02 to 1.05.

4. Method according to claims 1 or 2, in which the control value (5) in step a) is varied about a lambda value of 1.0 with a first amplitude (6), and in step d), a second amplitude (7) is set which is greater than the first amplitude (6).

5. Method according to one of the preceding claims, in which the determination of an oxygen demand is calculated on the basis of a regeneration model of the particle separator (3).

6. Method according to one of the preceding claims, in which, during step d), a temperature of at least 500°C is present in the region of the particle separator (3).

7. Motor vehicle (8) having an Otto-engine (9) and also an exhaust system (1) which is connected to the Otto-engine (9) and through which the exhaust gas produced in the Otto-engine (9) can flow in a flow direction (10), which exhaust system (1) has at least one sensor (10), and in which exhaust system (1) at least one particle separator (3) and one three-way catalytic converter (4) are arranged in series in the flow direction (10), wherein a controller (12) for the Otto-engine (9) interacts with the at least one sensor (11) of the exhaust system (1) and is set up to carry out a method according to one of the preceding claims.

8. Motor vehicle (8) according to claim 7, in which a first lambda probe (13) is arranged upstream of the particle separator (3) in the flow direction (10) and at least one second lambda probe (14) is arranged downstream of the particle separator (3) or downstream of the three-way catalytic converter (4).

9. Motor vehicle (8) according to claim 7 or 8, in which the particle separator (3) is formed with a honeycomb body (15) which has open channels (16) delimited by a metallic foil (17) and a wire nonwoven (18).

## Revendications

1. Procédé pour faire fonctionner une installation de gaz d'échappement (1) d'un moteur à combustion interne Otto (2), dans lequel sont disposés au moins un séparateur de particules (3) et, en aval, un catalyseur (4), comprenant au moins les étapes suivantes :
a) conduite des processus dans le moteur à combustion interne (2) avec une régulation lambda à une valeur de régulation (5) ;
b) identification d'un processus de régénération du séparateur de particules (3) ;
c) détermination d'un besoin en oxygène ;
d) adaptation de la régulation lambda à exactement le besoin en oxygène nécessaire déterminé pour l'intervalle de temps du processus de régénération du séparateur de particules (3),
**caractérisé en ce que** le procédé comprend en outre l'étape suivante : détermination du besoin en oxygène, qui est requis à lui seul pour le processus de régénération du séparateur de particules (3), c'est-à-dire pour l'oxydation des particules dans le séparateur de particules.

2. Procédé selon la revendication 1, dans lequel la valeur de régulation dans l'étape a) est une valeur lambda de 1,0.

3. Procédé selon la revendication 1 ou 2, dans lequel la valeur de régulation (5) dans l'étape d) est une valeur lambda de l'ordre de 1,02 à 1,05.

4. Procédé selon la revendication 1 ou 2, dans lequel la valeur de régulation (5) dans l'étape a) est variée d'une valeur lambda de 1,0 avec une première amplitude (6) et dans l'étape d), une deuxième amplitude (7) est ajustée, laquelle est supérieure à la première amplitude (6).

5. Procédé selon l'une quelconque des revendications précédentes, dans lequel la détermination d'un besoin en oxygène est calculée à l'aide d'un modèle de régénération du séparateur de particules (3).

6. Procédé selon l'une quelconque des revendications précédentes, dans lequel il règne, pendant l'étape d), une température d'au moins 500°C dans la région du séparateur de particules (3).

7. Véhicule automobile (8) présentant un moteur Otto (9) ainsi qu'une installation de gaz d'échappement (1) se raccordant au moteur Otto (9), qui peut être parcourue par le gaz d'échappement produit dans le moteur Otto (9) dans un sens d'écoulement (10), qui présente au moins un capteur (11) et dans laquelle sont disposés, l'un derrière l'autre dans la direction d'écoulement (10), au moins un séparateur de particules (3) et un catalyseur à trois voies (4), une commande (12) pour le moteur Otto (9) coopérant avec l'au moins un capteur (11) de l'installation de gaz d'échappement (1) et étant prévue pour mettre en oeuvre un procédé selon l'une quelconque des revendications précédentes.

8. Véhicule automobile (8) selon la revendication 7, dans lequel une première sonde lambda (13) est disposée dans le sens de l'écoulement (10) avant le séparateur de particules (3) et au moins une deuxième sonde lambda (14) est disposée après le séparateur de particules (3) ou après le catalyseur à trois voies (4).

9. Véhicule automobile (8) selon la revendication 7 ou 8, dans lequel le séparateur de particules (3) est réalisé avec un corps en nid d'abeilles (15) qui présente des canaux ouverts (16) qui sont limités par un film métallique (17) et un non-tissé en fil métallique (18).
